# EUROPEAN PATENT APPLICATION

(11) **EP 1 431 224 A1**
(43) Date of publication of application: **23.06.2004**
(21) Application number: 03029480.5
(22) Date of filing: 19.12.2003
(51) Int. Cl.: B65H 59/36, B29C 47/02, B29C 47/34, B29C 47/92, B60J 10/02

(54) **Method and apparatus for producing a plate-like body attached with a resin frame**

(30) Priority: 20.12.2002 JP 2002369897
(71) Applicant: ASAHI GLASS COMPANY LTD., Tokyo 100-8405 (JP)
(72) Inventor: Kondo, Takanobu c/o Asahi Glass Company Ltd., Chita-gun Aichi (JP); Matsumoto, Shin c/o Asahi Glass Company Ltd., Chita-gun Aichi (JP)
(74) Representative: Müller-Boré & Partner Patentanwälte

(57) **Abstract**

A molded product is produced with a desired cross-sectional area, tension of the molded product to be taken in a press-bonding device is stabilized, and the difference between the production speed of the molded body and the taking-in speed of the molded body in the press-bonding device is absorbed to improve the yield.

A resin material 7a for the frame is extruded through an extrusion die 20 at a predetermined extruding speed, hardened in a cooling unit 21 to be a molded product 7 and taken up by a take-up unit 24 at a predetermined speed, whereby a molded product 7 having a desired cross-sectional area is continuously molded. A molded product reservoir 38 is provided between the take-up unit 24 and the press-bonding device 32 to apply a predetermined tension to the molded product 7 to be taken in the press-bonding device 32, whereby the variation in the taking up speed of the molded product 7 by the take-up unit 24 and the variation in the taken-in speed of the molded product 7 in the press-bonding device 32 are absorbed by the molded product 38.

## Description

The present invention relates to a method and an apparatus for producing a plate-like body attached with a resin frame suitable for a glass window for automobiles or a glass window for architectural structures.

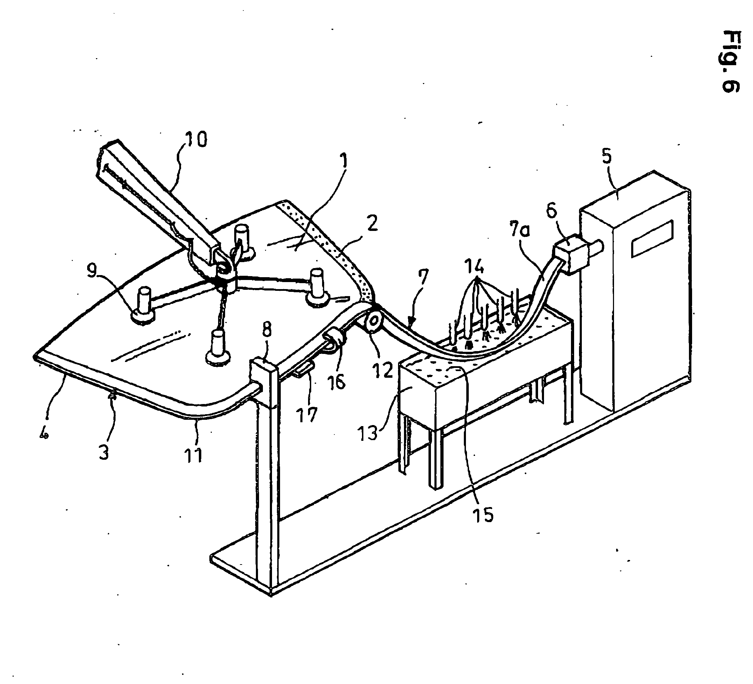

There is a method for producing a plate-like body attached with a resin frame by integrating a resin frame with the periphery of a plate-like body such as a glass sheet or a plastic plate to be used as a window glass for automobiles or architectural structures. Fig. 6 shows a conventional embodiment, wherein a resin material 7a for the frame is extruded in a predetermined cross-sectional shape through an extrusion die 6 of an extruder 5, and the resin material 7a for the frame is cooled and hardened by spray nozzles 14 and water 15 in a water bath 13 to produce a molded product 7 of a resin frame. The molded product 7 produced is taken in a press-bonding device 8 via e.g. a guide roller 12 and heating devices 16 and 17. A conveying apparatus comprising e.g. a driving robot 10 sucks and holds a plate-like body 1 by means of sucking disks 9 and moves the periphery of the plate-like body 1 with respect to the press-bonding device 8. The press-bonding device 8 takes in and press-bond the molded product 7 to a portion where an adhesive 2 is applied in advance, of the periphery of the plate-like body 1 moved by the conveying apparatus, whereby a plate-like body attached with a resin frame having a resin frame 3 integrated with the periphery of the plate-like body 1, is produced (for example, refer to JP-A-2002-240122).

By the method described in the above JP-A-2002-240122, the resin material 7a for the frame extruded through the extrusion die 6 is hardened by cooling to be a molded product having a constant shape. However, immediately after extruded from the extrusion die 6, the resin material 7a for the frame is soft and thus is likely to draw down and deform. Accordingly, it is significantly affected by a tension for taking up the molded product 7. If. the tension is large, the resin material 7a for the frame will be elongated, and its cross-sectional area will be reduced. On the contrary, if the tension is small, the resin material 7a for the frame will be shrinked, and its cross-sectional area will be increased. Thus, it is difficult to produce a molded product having a constant cross-sectional shape.

In order to produce the plate-like body attached with a resin frame with high productivity, the periphery of the plate-like body 1 supported by the conveying apparatus constituted by the driving robot 10, is moved at a high speed with respect to the press-bonding device 8. Here, the plate-like body 1 such as a glass sheet for automobile windows, has a substantially rectangular shape having straight portions 4 and curved portions at corner portions 11, as shown in Fig 6. With the straight portions 4, the molded product 7 can be integrated by letting the straight portions 4 move at a high speed with respect to the press-bonding device 8. However, with the curved portions at corner portions 11, it is difficult to let the curved portions move at a high speed since the plate-like body 1 needs to be rotated for this purpose.

Therefore, the speed of the molded product 7 taken in the press-bonding device 8 has to be changed. Heretofore, a programmed operation has been performed to change the extruding speed of the resin material 7a for the frame through the extrusion die 6, in accordance with the change of the speed of the molded product 7 taken in the press-bonding device 8. However, it has been difficult to match the speed of the molded product 7 taken in the press-bonding device 8 and the extruding speed of the resin material 7a for the frame through the extrusion die 6, whereby a large variation of the tension has sometimes been applied to the resin material 7a for the frame at the exit of the extrusion die 6. Thus, it has been difficult to produce a molded product 7 having a desired cross-sectional area, and a defective external appearance of the resin frame has been likely to occur, whereby, a stable production has been difficult.

Further, since the speed of the molded product 7 taken in the press-bonding device does not satisfactorily match the extruding speed of the resin material 7a for the frame through the extrusion die 6 as described above, the tension of the molded product 7 taken in the press-bonding device 8 may change drastically, whereby there may be cases where the bonding of the molded product 7 to the periphery of the plate-like body 1 becomes unstable and uniform bonding can not be obtained.

The present invention is to solve the above-described problems, and it is an object of the present invention to provide a method and an apparatus for producing a plate-like body attached with a resin frame, whereby a molded product of a resin frame can be continuously produced with a desired cross-sectional area, a constant predetermined tension is applied to the molded product taken in the press-bonding device, so that the bonding of the molded product to the plate-like body can be performed well, and the difference between the production speed of the molded product continuously molded and the speed of the molded product taken in the press-bonding device, is absorbed, so that the yield of the material can be increased.

In a first aspect, the present invention provides a method for producing a plate-like body attached with a resin frame, which comprises hardening, in a cooling unit, a resin material for the frame extruded in a predetermined cross-sectional shape through an extrusion die, to form a molded product of a resin frame, and taking the molded product in a press-bonding device in accordance with the moving speed of the periphery of a plate-like body moving with respect to the press-bonding device to integrate the molded product with the periphery of the plate-like body, wherein the resin material for the frame is extruded through the extrusion die at a predetermined extruding speed, the molded product hardened in the cooling unit is taken up by a take-up unit at a predetermined taking up speed to continuously form the molded product having a desired cross-sectional area, a molded product reservoir is provided between the take-up unit and the press-bonding device, to apply a predetermined tension to the molded product to be taken in the press-bonding device, and the molded product reservoir absorbs variation in the taking up speed of the molded product into the take-up unit and variation in the taking-in speed of the molded product into the press-bonding device.

In a second aspect, the present invention provides a method for producing a plate-like body attached with a resin frame, which comprises hardening, in a cooling unit, a resin material for the frame extruded in a predetermined cross-sectional shape through an extrusion die, to form a molded product of a resin frame, and taking the molded product in a press-bonding device in accordance with the moving speed of the periphery of a plate-like body moving with respect to the press-bonding device to integrate the molded product'with the periphery of the plate-like body, wherein the resin material for the frame is extruded through the extrusion die at a predetermined extruding speed, the molded product hardened in the cooling unit is taken up by a take-up unit at a predetermined taking up speed to continuously form the molded product having a desired cross-sectional area, a second take-up unit is provided between the entrance of the press-bonding device and the first take-up unit, a tension-keeping pendent portion is provided between the second take-up unit and the press-bonding device, to apply a predetermined tension to the molded product to be taken in the press-bonding device, and a reservoir pendent portion is provided between the first take-up unit and the second take-up unit, to absorb variation in the taking up speed of the molded product into the first take-up unit and variation in the taking up speed of the molded product to the tension-keeping pendent portion by the second take-up unit.

In a third aspect, the present invention provides an apparatus for producing a plate-like body attached with a resin frame, by hardening, in a cooling unit, a resin material for the frame extruded in a predetermined cross-sectional shape through an extrusion die, to form a molded product of a resin frame, and taking the molded product in a press-bonding device in accordance with the moving speed of the periphery of a plate-like body moving with respect to the press-bonding device to integrate the molded product with the periphery of the plate-like body, which comprises an extrusion die for continuously extruding the resin material for the frame at a predetermined extruding speed, a take-up unit for taking up the molded product hardened in the cooling unit at a predetermined taking up speed, and a molded product reservoir provided between the take-up unit and the press-bonding device, to apply a predetermined tension to the molded product to be taken in the press-bonding device, and to absorb variation in the taking up speed of the molded product into the take-up unit and variation in the taking-in speed of the molded product into the press-bonding device.

In the apparatus for producing a plate-like body attached with a resin frame, it is preferred that a material pendent amount detector is provided to detect the pendent amount of the resin material for the frame at the exit of the extrusion die and adjust the taking up speed of the take-up unit so that the pendent amount becomes within a predetermined range.

Further the molded product reservoir may be a pendent portion of the molded product formed by its own weight. Otherwise, the molded product reservoir may be a deflection control device for deflecting the moving path of the molded product between the take-up unit and the press-bonding device to control the path length of the molded product, while applying a tension to the molded product. Otherwise, the molded product reservoir may be a rotational frame mechanism having the molded fit thereon product between the take-up unit and the press-bonding device to control the path length of the molded product, while applying a tension to the molded product.

In a fourth aspect, the present invention provides an apparatus for producing a plate-like body attached with a resin frame, by hardening, in a cooling unit, a resin material for the frame extruded in a predetermined cross-sectional shape through an extrusion die, to form a molded product of a resin frame, and taking the molded product in a press-bonding device in accordance with the moving speed of the periphery of a plate-like body moving with respect to the press-bonding device to integrate the molded product with the periphery of the plate-like body, which comprises an extrusion die for continuously extruding the resin material for the frame at a predetermined extruding speed, a take-up unit for taking up the molded product hardened in the cooling unit at a predetermined taking up speed, a second take-up unit provided between the first take-up unit and the press-bonding device, to control the taking up speed of the molded product, a tension-keeping pendent portion provided between the second take-up unit and the press-bonding device, to apply a predetermined tension to the molded product to be taken in the press-bonding device, and a reservoir pendent portion provided between the first take-up unit and the press-bonding device, to absorb variation in the taking up speed of the molded product into the first take-up unit and variation in the taking-in speed of the molded product into the press-bonding device.

In the apparatus for producing a plate-like body attached with a resin frame, it is preferred that a material pendent amount detector is provided to detect the pendent amount of the resin material for the frame at the exit of the extrusion die and adjust the taking up speed of the first take-up unit so that the pendent amount becomes within a predetermined range.

Further, it is preferred that a material pendent amount detector is provided to detect the pendent amount of the molded product at the tension-keeping pendent portion and adjust the taking up speed of the second take-up unit so that the pendent amount becomes within a predetermined range.

According to the first and third aspect of the present invention, the resin material for the frame is extruded at a predetermined extruding speed from the extrusion die, and the molded product hardened in the cooling unit is taken up at a predetermined speed by the take-up unit, whereby a molded product having a desired cross-sectional shape can be continuously produced with high precision. Further, a molded product reservoir is provided between the take-up unit and the press-bonding device, to apply a predetermined tension to the molded product to be taken in the press-bonding device, whereby bonding of the molded product to the periphery of the plate-like body is improved and uniform bonding can be obtained. Further, since the molded product reservoir absorbs variation in the taking up speed of the molded product by the take-up unit and variation in the taking-in speed of the molded product into the press-bonding device, the difference between the production speed of the molded product continuously molded and the taking-in speed of the molded product into the press-bonding device, can be absorbed, whereby a constant production of the plate-like body attached with a resin frame becomes possible, and the yield of the material can be improved as well.

According to the second and fourth aspects of the present invention, a second take-up unit is provided between the first take-up unit and the press-bonding device, and the taking up speed of the second take-up unit is adjusted so that the pendent amount of the tension-keeping pendent portion formed between the second take-up unit and the press-bonding device, is substantially constant, whereby the tension of the molded product to be taken in the press-bonding device is maintained to be substantially constant, and the bonding of the molded product to the periphery of the plate-like body is further improved to obtain a uniform bonding. Further, since the second take-up unit feeds the molded product so that the pendent amount of the tension-keeping pendent portion becomes substantially constant, the tension of the molded product to be taken in the press-bonding device is not affected by an increase or a decrease of the pendent amount (reserved amount) of the reservoir pendent portion.

Now, preferred embodiments of the present invention will be described with reference to drawings.

Fig. 1 is a schematic side view showing an embodiment of the apparatus for producing a plate-like body attached with a resin film of the present invention.

Fig. 2 is a schematic side view showing a state where the production of a plate-like body attached with a resin frame has been completed in the apparatus of Fig. 1.

Fig. 3 is a schematic side view showing an embodiment of a molded product reservoir having a construction different from Fig 1.

Fig. 4 is a schematic side view showing an embodiment of a molded product reservoir having a construction different from Figs. 1 and 3.

Fig. 5 is a schematic side view showing another embodiment of the apparatus for producing a plate-like body attached with a resin frame of the present invention.

Fig. 6 is a schematic perspective view showing an example of a conventional method for producing a plate-like body attached with a resin frame.

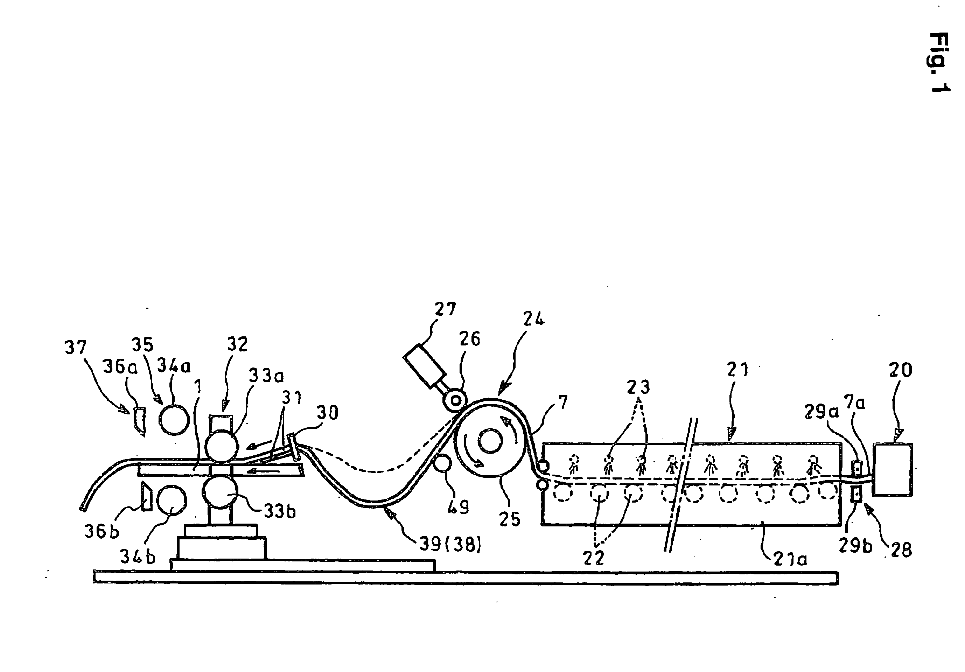

Fig. 1 shows an embodiment of the apparatus for producing a plate-like body attached with a resin frame of the present invention. In the figure, 20 designates an extrusion die. The extrusion die 20 is continuously extrudes a resin material 7a for the frame in a predetermined cross-sectional shape at a predetermined extruding speed by means of a pressurizing means such as a screw, not shown. The resin material 7a for the frame extruded from the extrusion die 20 is cooled and hardened in a cooing unit 21 such as a water bath 21a to be a molded product 7 having a desired cross-sectional shape. In the water bath 21a of the cooling unit 21, there are provided a plurality of guiding rollers 22 to guide the resin material 7a for the frame to move thereon, and a plurality of spray nozzles 23 to spray cooled water to the resin material 7a for the frame moving on the guiding rollers.

At the exit of the cooling unit 21, a take-up unit 24 is provided to take up the molded product 7 at a predetermined speed from the cooing unit 21. The take-up unit 24 is constituted by a rotating roller 25 for guiding the molded product 7, whose rotating speed is adjustable, a pressing roller 26 for pressing the molded product 7 against the rotating roller 25 to secure the taking up of the molded product 7, and a pressing device 27 such as a cylinder capable of pressing and releasing the pressing roller 26 and whose pressing force is adjustable. Further, as shown in Fig. 1, the winding angle of the molded product 7 around the rotating roller 25, is increased to increase the friction between the rotating roller 25 and the molded product 7 thereby to further secure the taking up of the molded product 7.

Immediately after extruded from the extrusion die 20, the resin material 7a for the frame is soft and thus is likely to draw down and deform. If the tension is large, the resin material 7a for the frame will be elongated and the cross-sectional area will be reduced. On the contrary, if the tension is small, the resin material 7a for the frame will be shrinked and the cross-sectional area will be increased. To cope with this problem, a material pendent amount detector 28 is provided at the exit of the extrusion die 20, to detect the pendent amount of the resin material 7a for the frame and adjust the taking up speed of the take-up unit 24 so that the pendent amount becomes within a predetermined range. The material pendent amount detector 28 comprises, for example, photoelectric tubes 29a and 29b disposed at top and bottom portions at the exit of the extrusion die 20, to detect the presence or absence of the resin material 7a for the frame, and the taking up speed of the take-up unit 24 is controlled so that the resin material 7a for the frame is always located between the top and bottom photoelectric tubes 29a and 29b. Therefore, the soft resin material 7a for the frame is led to the cooling unit 21 with a constant tension while always maintaining a predetermined pendent amount, whereby it is prevented from being deformed into an irregular shape. By such a construction, the molded product can be produced with a desired cross-sectional shape and, a desired cross-sectional area and with high precision.

The molded product 7 from the take-up unit 24 is taken in the space between press-bonding rollers 33a and 33b of a press-bonding device 32 by way of a molded product guide 30 provided with a slit to guide the molded product 7 to the periphery of the plate-like body 1 at a predetermined tilt angle, and a heating device 31 to heat the bonding surface of the molded product 7 by a hot air fan or the like. An opening of the press-bonding device 32, is constructed to allow the periphery of the plate-like body 1 supported by a conveying apparatus such as a driving robot 10, to move into the opening so that the press-bonding device 32 can take in the molded product 7 in accordance with the movement of the periphery of the plate-like body 1 and integrate it with the plate-like body 1.

At the rear side of the press-bonding device 32, a final take-up unit 35 is provided which comprises rotational rollers 34a and 34b capable of coming close or apart to pull the molded product 7 taken into the press-bonding device 32. And at the rear side of the final take-up unit 35, a cutter 37 is provided which comprises cutting blades 36a and 36b capable of moving apart, to cut the molded product 7. The final take-up unit 35 and the cutter 37 stand by at positions where they don't interfere with the plate-like body 1 when the plate-like body 1 is moving as shown in Fig. 1, and whenever necessary, the rotational rollers 34a and 34b of the final take-up unit 35 come close to pinch and pull the molded product 7, and the cutting blades 36a and 36b of the cutter 37 come close to cut the molded product 7.

In the above construction, a molded product reservoir 38 is provided between the first take-up unit 24 and the press-bonding device 32.

Fig. 1 shows a case where, as the molded product reservoir 38, a molded product pendent portion 39 is provided between the take-up unit 24 and the press-bonding device 32, by the molded product 7 sagged by its own weight. In the case of this molded product reservoir 38, when the amount of the molded product 7 taken in the press-bonding device 32 is changed, the variation in the amount of the molded product 7 taken in the press-bonding device 32 is absorbed by an increase or decrease of the pendent amount of the molded product pendent portion 39, and at the same time, a predetermined tension is always applied to the molded product 7 to be taken in the press-bonding device 32. In the figure, 49 designates an antiwinding roller to prevent the molded product 7 at the molded product pendent portion 39 from being wound around the periphery of the rotational roller 25 of the take-up unit 24.

on the other hand, if the pendent amount of the molded product pendent portion 39 becomes too large, there is a possibility that the frictional resistance by the molded product guide 30 is increased to increase the tension of the molded product 7 taken in the press-bonding device 32 thereby to deteriorate the bonding precision. Further, there may be a problem such that the molded product 7 comes in contact with e.g. a member located underneath and is thereby contaminated. To cope with these problems, it is preferred that a molded product pendent portion 39 having a predetermined pendent amount is formed between the take-up unit 24 and the press-bonding device 32 in advance, the pendent amount of the molded product pendent portion 39 is monitored by the same method as the case of the material pendent amount detector 28 at a time of continuous operation, and if the pendent amount becomes out of the predetermined range, the rotational speed of the screw of the extrusion die 20 is finely adjusted to keep the pendent amount of the molded product pendent portion 39 within the predetermined range.

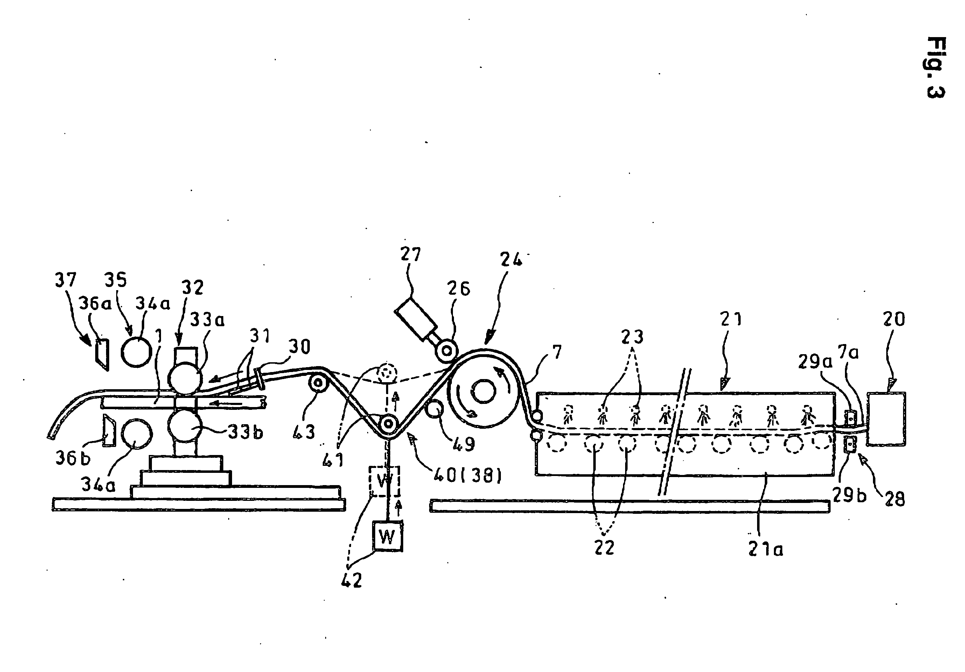

Fig. 3 shows another embodiment of the molded product reservoir 38. In this case, the molded product reservoir 38 comprises a deflection control device 40 provided between the take-up unit 24 and the press-bonding device 32 to deflect the moving path of the molded product 7 and adjust the length of the moving path. The deflection control device 40 lets the molded product 7 sag downwardly between the take-up unit 24 and the press-bonding device 32, and the pendent portion is formed by a free roller 41 and a tension member 42 for pulling the free roller downwardly by an weight or a spring. Further, in the vicinity of the molded product guide 30, a guiding free roller 43 is provided to prevent increase of the moving resistance of the molded product 7 at the molded product guide 30. In the molded product reservoir 38, when the amount of the molded product 7 taken in the press-bonding device 32 changes, the free roller 41 moves up or down by the tension member 42 to absorb the variation in the amount of the molded product 7 taken in the press-bonding device 32, and at the same time, a predetermined tension is always applied to the molded product 7 to be taken in the press-bonding device 32. The deflection control device 40 may be constructed so that instead of the method of letting the molded product 7 sag downwardly as described above, the molded product 7 is bent upwardly and the bent portion is pulled upwardly by employing a free roller and a tension member. Further, the molded product 7 may be bent in a lateral direction or in a diagonal direction so long as the formed product reservoir can be formed, and the direction of deflecting the moving path of the molded product 7 is not particularly restricted.

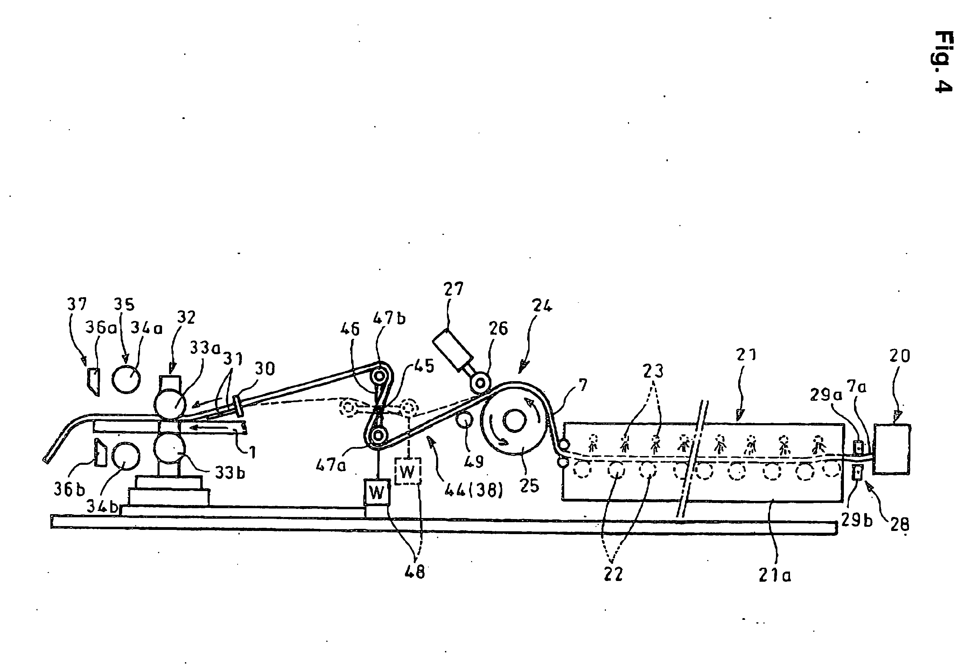

Fig. 4 shows still another embodiment of the molded product reservoir 38. In the case of the molded product reservoir 38 in Fig. 4, provided between the take-up unit 24 and the press-bonding device 32, is a rotational frame unit 44 having the molded product 7 passing thereover and being capable of changing the length of the path of the molded product 7 by rotation. The rotational frame unit 44 comprises guide rollers 47a and 47b at both ends of a frame 46 rotationally supported by a rotational pin 45 at the central portion of its length. The rotational frame unit 44 is constructed so that the molded product 7 from the take-up unit 24 is wound around a (bottom side) guide roller 47a from bottom side, then wound around a (top side) guide roller 47b from top side and led to the press-bonding device 32, and a tension member 48 is attached to the (bottom side) guide roller 47a for pulling downwardly by means of an weight or a spring. In this molded product reservoir 38, when the amount of the molded product 7 taken in the press-bonding device 32 is increased, the rotational frame unit 44 rotates counterclockwise to feed the molded product 7 out, and when the amount of the molded product 7 taken in the press-bonding device 32 is decreased, the rotational frame unit 44 rotates clockwise to reserve the molded product 7, whereby the variation in the amount of the molded product 7 taken in can be absorbed, and a predetermined tension is always applied to the molded product 7 to be taken in the press-bonding device 32.

Now, the functions of the embodiments shown in Fig. 1 to Fig. 4 will be described.

The extrusion die 20 is controlled to continuously extrude resin material 7a for the frame always at a predetermined extruding speed. The resin material 7a for the frame extruded from the extrusion die 20 is cooled and hardened in a cooling unit 21 to be a molded product 7, and taken up by a take-up unit 24 provided at the exit of the cooling unit 21 at a predetermined taking up speed.

Here, the resin material 7a for the frame extruded from the extrusion die 20 is detected by a material pendent amount detector 28 comprising top and bottom photo-electric tubes 29a and 29b disposed at the exit of the extrusion die 20, and the taking up speed of the take-up unit 24 is adjusted so that the pendent portion of the resin material 7a for the frame detected by the material pendent amount detector 28, is always located between the top and bottom photo-electric tubes 29a and 29b. By this function, the soft resin material 7a for the frame is prevented from being deformed to have an irregular shape, and the variation in the tension to the resin material 7a for the frame is prevented, whereby the formed product 7 having a desired cross-sectional area can be produced with high precision.

In Fig. 1, the molded product 7 taken up by the take-up unit 24, forms a molded product reservoir 38 at the molded product pendent portion 39. Then, it is taken in the press-bonding device 32 by way of a molded product guide 30 and a heating device 31, and press-bonded to the periphery of a plate-like body 1 such as a glass sheet moved by a conveying apparatus, by means of the press-bonding device 32 and integrated with the plate-like body 1.

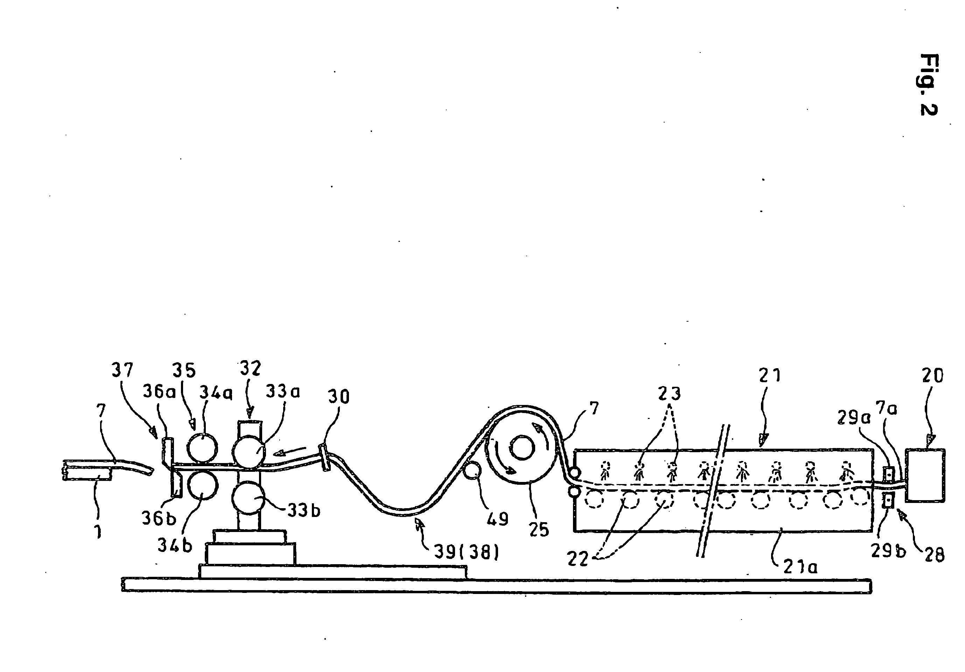

In Fig. 1, in order to integrate the molded product 7 with the plate-like body 1, the molded product reservoir 38 constituted by the formed product pendent portion 39 having a predetermined pendent amount is formed between the take-up unit 24 and the press-bonding device 32, the molded product 7 is cut by cutting blades 36a and 36b of a cutter 37 in a state where the molded product 7 is pinched by rotational rollers 34a and 34b of a final take-up unit 35 as shown in Fig. 2, and in this state, the starting edge of the periphery of the plate-like body 1 supported by the conveying apparatus is inserted into an opening of the press-bonding device 32 to start press-bonding the molded product 7 by press-bonding rollers 33a and 33b for integration. At the same time as starting the press bonding, the rotational rollers 34a and 34b of the final take-up unit 35, and the cutting blades 36a and 36b of the cutter 37 are moved away, as shown in Fig. 1, to let the plate-like body 1 pass through to perform the integration.

When the integration of the formed product 7 with three sides of the plate-like body 1 is completed, the plate-like body 1 is moved to the rear side of the cutter 37 as shown in Fig. 2. Then, the final take-up unit 35 lets the rotational rollers 34a and 34b move close and pinch the molded product 7, and the cutter 37 lets the cutting blades 36a and 36b move close and cut the molded product 7, whereby the production of a plate-like body attached with a resin material is completed.

Further, in the molded product reservoir 38 formed by the reflection control device 40 in Fig. 3, the pendent amount of the molded product 7 is adjusted by means of the tension member 42, whereby the variation in the amount of the molded product 7 to be taken in the press-bonding device 32 is absorbed, a predetermined tension is always applied to the molded product 7 to be taken in the press-bonding device 32, and further, the variation in the amount of the molded product 7 to be taken in the press-bonding device 32 is absorbed.

Further, in the molded product reservoir 38 formed by the rotational frame unit 44 in Fig. 4, the frame 46 is rotated by the tension member 48 to adjust the pendent amount of the molded product 7, whereby the variation in the amount of the molded product 7 to be taken in the press-bonding device 32 is absorbed, a predetermined tension is always applied to the molded product 7 to be taken in the press-bonding device 32, and further, the variation in the amount of the molded product 7 to be taken in the press-bonding device 32 is absorbed.

As shown in Fig. 1 to Fig. 4, the take-up unit 24 controls the taking up speed of the molded product 7 so that the pendent amount of the resin material 7a for the frame detected by the material pendent amount detector 28 is always located between the top and bottom photo-electric tubes 29a and 29b. Since the pendent amount of the resin material 7a for the frame is always maintained within a predetermined range, the tension is stabilized, the soft resin material 7a for the frame is prevented from being deformed to have an irregular shape, and the molded product 7 having a desired cross-sectional area can thereby be produced with high precision.

Further, the molded product reservoir 38 provided between the take-up unit 24 and the press-bonding device 32, absorbs the variation in the taking up speed of the take-up unit 24 whose taking up speed is controlled so that the pendent amount of the resin material 7a for the frame at the exit of the extrusion die 20 is always maintained within a predetermined range. Further, the above-mentioned molded product reservoir 38 applies always a predetermined tension to the molded product 7 to be taken in the press-bonding device 32, whereby the bonding of the molded product 7 to the periphery of the plate-like body 1 is improved to obtain a uniform bonding.

Further, the taking-in speed of the molded product 7 in the press-bonding device 32, significantly changes depending on the portions to be bonded, namely, the straight portions 4 or the corner portions 11 in the periphery of the plate-like body 1 in Fig. 6. Further, taking-in of the molded product 7 is stopped in a period between completion of the integration of the molded product 7 with the plate-like body 1 and start of the integration of the molded product 7 with the next plate-like body 1. Such a significant change of the taking-in speed of the molded product 7 into the press-bonding device 32, can also be absorbed by the molded product reservoir 38. Thus, the difference between the production speed of the molded product 7 continuously molded and the varying taking-in speed of the molded product 7 into the press-bonding device 32, is absorbed by the molded product reservoir 38, whereby a constant production of a plate-like body attached with a resin frame becomes possible, and the yield of the material can also be improved.

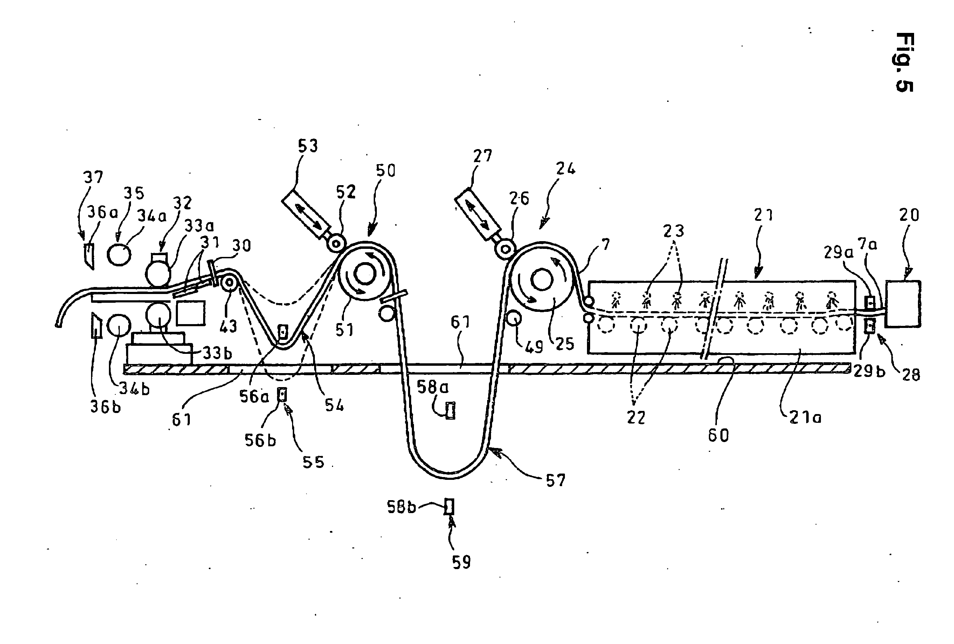

Fig. 5 shows another embodiment of an apparatus for producing a plate-like body attached with a resin frame of the present invention. In the apparatus, a second take-up unit 50 capable of controlling the taking up speed of the molded product 7, is provided between a first take-up unit 24 and a press-bonding device 32 having the same constructions as in Fig. 1. The second take-up unit 50 comprises, in the same manner as the first take-up unit 24, a rotational roller 51 whose rotation speed is adjustable, a pressing roller 52 for pressing the molded product 7 against the rotational roller 51 to securely feed the molded product 7, and a pressing device 53 such as a cylinder capable of pressing and releasing the pressing roller 52 and whose pressing force is adjustable.

A tension-keeping pendent portion 54 is formed between the second take-up unit 50 and the press-bonding device 32, to apply a tension of within a predetermined range to the molded product 7 to be taken in the press-bonding device 32. The tension-keeping pendent portion 54 is formed by letting the molded product 7 sag by its own weight.

Further, in the tension-keeping pendent portion 54, a pendent amount detector 55 is provided to detect the pendent amount of the molded product 7 and adjust the taking up speed of the second take-up unit 50 so that the pendent amount becomes within a predetermined range. The pendent amount detector 55 comprises photo-electric tubes 56a and 56b provided at the top and the bottom positions across the lowest portion of the tension-keeping pendent portion 54, to detect the presence or absence of the molded product 7, and the taking up speed of the second take-up unit 50 is controlled so that the molded product 7 is always located between the top and bottom photo-electric tubes 56a and 56b.

Further, a reservoir pendent portion 57 is provided between the first take-up unit 24 and the second take-up unit 50, to absorb the variation in the taking up speed of the molded product 7 by the first take-up unit 24 and to absorb the variation in the taking up speed of the molded product 7 supplied to the tension-keeping pendent portion 54 by the second take-up unit 50. In the reservoir pendent portion 57, there may be provided a reservoir detector 59 comprising top and bottom photo-electric tubes 58a and 58b to detect the pendent amount of the reservoir pendent portion 57 in the same manner as the pendent amount detector 55, whereby when the pendent amount of the reservoir pendent portion 57 changes out of the predetermined range, the rotation speed of the screw of the extrusion die 20 is finely adjusted so that the pendent amount of the reservoir pendent portion 57 is maintained to be within the predetermined range. Further, in the embodiment of Fig. 5, openings 61 are provided on a floor to prevent the molded product 7 from being in contact with the floor 60 even if the pendent amounts of the tension-keeping pendent portion 54 and the reservoir pendent portion 57 increase. Constructions of other portions are the same as in the embodiments of Fig. 1 to Fig. 4.

Now, the function of the embodiment of Fig. 5 will be described.

In the embodiment of Fig. 5, besides the function of producing the molded product 7 having a desired cross-sectional area by employing the first take-up unit 24 as shown in Fig. 1 to 4, the tension applied to the molded product 7 to be taken in the press-bonding device 32 can be maintained to be substantially constant. Namely, a tension-keeping pendent portion 54 of the molded product 7 is formed between the second take-up unit 50 and the press-bonding device 32, the pendent amount of the tension-keeping pendent portion 54 is detected by the pendent amount detector 55, and the taking up speed of the second take-up unit 54 is adjusted so that the pendent amount becomes within a predetermined range, whereby the pendent amount is controlled to be within the predetermined range and the pendent amount becomes substantially constant. By this function, the tension of the molded product 7 to be taken in the press-bonding device 32 is maintained to be substantially constant, whereby the bonding of the molded product 7 to the periphery of the plate-like body 1 is improved to obtain uniform bonding.

Further, since the second take-up unit 50 supplies the molded product 7 so that the pendent amount of the tension-keeping pendent portion 54 becomes substantially constant, the tension of the molded product 7 to be taken in the press-bonding device 32 is not affected even if the pendent amount (reservoir amount) of the reservoir pendent portion 57 is increased or decreased. Therefore, the pendent amount of the reservoir pendent portion 57 may be optionally increased or decreased. Further, if a reservoir detector 59 comprising photo-electric tubes 58a and 58b is provided to detect the pendent amount of the reservoir pendent portion 57, the rotation speed of the screw of the extrusion die 20 can be finely adjusted according to the detection of the photo-electric tubes 58a and 58b, whereby the pendent amount of the reservoir pendent portion 57 can be controlled not to change out of a predetermined range.

The present invention is not limited to the above exemplified embodiments, and it is a matter of course that molded product reservoirs having various types of construction may be employed other than ones exemplified, and that various modifications may be added to the above embodiments within a range not deviating from the gist of the present invention.

According to the present invention, the following excellent effects can be obtained.

According to the present invention as defined in Claims 1 and 3 to 7, a resin material for the frame is extruded from an extrusion die at a predetermined extruding speed and is taken up by a take-up unit at a predetermined speed after it is hardened in a cooling unit, whereby a molded product having a desired cross-sectional shape can be continuously produced with high precision. Further, a molded product reservoir is provided between the take-up unit and the press-bonding device to apply a predetermined tension to the molded product to be taken in the press-bonding device, whereby the bonding of the molded product to the periphery of the plate-like body is improved to obtain a uniform bonding. Further, since the molded product reservoir absorbs the variation in the taking up speed of the molded product by the take-up unit and the variation in the taking-in speed of the molded product into the press-bonding device, the difference between the production speed of the molded body continuously molded and the varying taking-in speed of the molded product into the press-bonding device can be absorbed, whereby constant production of the plate-like body attached with a resin frame becomes possible and the yield of the material can be improved.

According to the present invention as defined in Claims 2 and 8 to 10, a second take-up unit (50) is provided between the first take-up unit (24) and the press-bonding device, and the taking up speed of the second take-up unit (50) is adjusted so that the pendent amount of the tension-keeping pendent portion formed between the second take-up unit (50) and the press-bonding device becomes substantially constant, whereby the tension of the molded product to be taken in the press-bonding device becomes substantially constant, and the bonding of the molded product to the periphery of the plate-like body is further improved to obtain uniform bonding. Further, since the second take-up unit (50) supplies the molded product so that the pendent amount of the tension-keeping pendent portion becomes substantially constant, the tension of the molded product to be taken in the press-bonding device is not affected even if the pendent amount (reservoir amount) of the reservoir pendent portion is increased or decreased.

The entire disclosure of Japanese Patent Application No. 2002-369897 filed on December 20, 2002 including specification, claims, drawings and summary is incorporated herein by reference in its entirety.

## Claims

1. A method for producing a plate-like body attached with a resin frame, which comprises hardening, in a cooling unit, a resin material for the frame extruded in a predetermined cross-sectional shape through an extrusion die, to form a molded product of a resin frame, and taking the molded product in a press-bonding device in accordance with the moving speed of the periphery of a plate-like body moving with respect to the press-bonding device, to integrate the molded product with the periphery of the plate-like body, wherein the resin material for the frame is extruded through the extrusion die at a predetermined extruding speed, the molded product hardened in the cooling unit is taken up by a take-up unit at a predetermined taking up speed to continuously form the molded product having a desired cross-sectional area, a molded product reservoir is provided between the take-up unit and the press-bonding device, to apply a predetermined tension to the molded product to be taken in the press-bonding device, and the molded product reservoir absorbs variation in the taking up speed of the molded product into the take-up unit and variation in the taking-in speed of the molded product into the press-bonding device.

2. A method for producing a plate-like body attached with a resin frame, which comprises hardening, in a cooling unit, a resin material for the frame extruded in a predetermined cross-sectional shape through an extrusion die, to form a molded product of a resin frame, and taking the molded product in a press-bonding device in accordance with the moving speed of the periphery of a plate-like body moving with respect to the press-bonding device, to integrate the molded product with the periphery of the plate-like body, wherein the resin material for the frame is extruded through the extrusion die at a predetermined extruding speed, the molded product hardened in the cooling unit is taken up by a first take-up unit at a predetermined taking up speed to continuously form the molded product having a desired cross-sectional area, a second take-up unit is provided between the entrance of the press-bonding device and the first take-up unit, a tension-keeping pendent portion is provided between the second take-up unit and the press-bonding device, to apply a predetermined tension to the molded product to be taken in the press-bonding device, and a reservoir pendent portion is provided between the first take-up unit and the second take-up unit to absorb variation in the taking up speed of the molded product into the first take-up unit and variation in the taking up speed of the molded product to the tension-keeping pendent portion by the second take-up unit.

3. An apparatus for producing a plate-like body attached with a resin frame, by hardening, in a cooling unit, a resin material for the frame extruded in a predetermined cross-sectional shape through an extrusion die, to form a molded product of a resin frame, and taking the molded product in a press-bonding device in accordance with the moving speed of the periphery of a plate-like body moving with respect to the press-bonding device, to integrate the molded product with the periphery of the plate-like body, which comprises:
an extrusion die for continuously extruding the resin material for the frame at a predetermined extruding speed,
a take-up unit for taking up the molded product hardened in the cooling unit at a predetermined taking up speed, and
a molded product reservoir provided between the take-up unit and the press-bonding device, to apply a predetermined tension to the molded product to be taken in the press-bonding device, and to absorb variation in the taking up speed of the molded product into the take-up unit and variation in the taking-in speed of the molded product into the press-bonding device.

4. The apparatus for producing a plate-like body attached with a resin frame according to Claim 3, wherein a material pendent amount detector is provided to detect the pendent amount of the resin material for the frame at the exit of the extrusion die and adjust the taking up speed of the take-up unit so that the pendent amount becomes within a predetermined range.

5. The apparatus for producing a plate-like body attached with a resin frame according to Claim 3 or 4, wherein the molded product reservoir is a pendent portion of the molded product formed by its own weight.

6. The apparatus for producing a plate-like body attached with a resin frame according to Claim 3 or 4, wherein the molded product reservoir is a deflection control device for deflecting the moving path of the molded product between the take-up unit and the press-bonding device to control the path length of the molded product, while applying a tension to the molded product.

7. The apparatus for producing a plate-like body attached with a resin frame according to Claim 3 or 4, wherein the molded product reservoir is a rotational frame mechanism with the molded product passing thereover between the take-up unit and the press-bonding device to control the path length of the molded product while applying a tension to the molded product.

8. An apparatus for producing a plate-like body attached with a resin frame, by hardening, in a cooling unit, a resin material for the frame extruded in a predetermined cross-sectional shape through an extrusion die, to form a molded product of a resin frame, and taking the molded product in a press-bonding device in accordance with the moving speed of the periphery of a plate-like body moving with respect to the press-bonding device, to integrate the molded product with the periphery of the plate-like body, which comprises:
an extrusion die for continuously extruding the resin material for the frame at a predetermined extruding speed,
a first take-up unit for taking up the molded product hardened in the cooling unit at a predetermined taking up speed,
the second take-up unit provided between the first take-up unit and the press-bonding device, to control the taking up speed of the molded product,
a tension-keeping pendent portion provided between the second take-up unit and the press-bonding device, to apply a predetermined tension to the molded product to be taken in the press-bonding device, and
a reservoir pendent portion provided between the first take-up unit and the press-bonding device, to absorb variation in the taking up speed of the molded product into the first take-up unit and variation in the taking-in speed of the molded product into the press-bonding device.

9. The apparatus for producing a plate-like body attached with a resin frame according to Claim 8, wherein a material pendent amount detector is provided to detect the pendent amount of the resin material for the frame at the exit of the extrusion die and adjust the taking up speed of the first take-up unit so that the pendent amount becomes within a predetermined range.

10. The apparatus for producing a plate-like body attached with a resin frame according to Claim 8 or 9, wherein a material pendent amount detector is provided to detect the pendent amount of the molded product at the tension-keeping pendent portion and adjust the taking up speed of the second take-up unit so that the pendent amount becomes within a predetermined range.
